# NEUE EUROPÄISCHE PATENTSCHRIFT

(11) **EP 0 759 374 B2**
(45) Veröffentlichungstag und Bekanntmachung des Hinweises auf die Entscheidung über den Einspruch: **29.12.2004**
(45) Hinweis auf die Patenterteilung: 24.10.2001
(21) Anmeldenummer: 96110935.2
(22) Anmeldetag: 06.07.1996
(51) Int. Cl.: B60N 2/02

(54) **Vorrichtung zum Verstellen eines Sitzes in einem Kraftfahrzeug**
Device for adjusting automotive vehicle seats
Dispositif pour régler des sièges de véhicules automobiles

(30) Priorität: 18.08.1995 DE 29513272 U
(43) Veröffentlichungstag der Anmeldung: 26.02.1997
(73) Patentinhaber: ROBERT BOSCH GMBH, 70442 Stuttgart (DE)
(72) Erfinder: Winter, Manfred, Dipl.-Ing., 77839 Lichtenau (DE); Huck, Thomas, Dipl.-Ing., 77839 Lichtenau (DE); Schiller, Herbert, Dipl.-Ing., 77830 Bühlertal (DE)

(56) Entgegenhaltungen:
- EP-A- 0 227 694
- EP-A- 0 317 381
- EP-A- 0 647 542
- DE-A- 3 323 923
- DE-A- 3 519 055
- DE-A- 3 611 158
- DE-A- 4 130 079
- DE-A- 4 331 822
- DE-C- 3 642 938
- DE-U1- 9 315 382
- US-A- 4 802 374
- US-A- 4 949 585
- US-A- 5 136 258
- US-A- 5 150 872
- US-A- 5 224 749
- US-A- 5 456 439
- US-A- 5 467 957
- US-A- 5 507 552
- US-A- 5 575 531
- US-A- 5 899 428
- US-A- 6 105 920

## Beschreibung

### Stand der Technik

Die Erfindung betrifft eine Vorrichtung zum Verstellen eines Sitzes in einem Kraftfahrzeug nach der Gattung des Hauptanspruchs. Die steten Überlegungen nach kostensenkenden Maßnahmen bei Verstellvorrichtungen der in Rede stehenden Art führen dazu, das Metall-Getriebegehäuse einer bekannten Verstellvorrichtung aus Kunststoff herzustellen. Da jedoch das Getriebegehäuse in den Kraftfluß vom festen Teil des Sitzes zum bewegbaren Bauteil einbezogen ist, muß es neben den im Normalbetrieb auftretenden Kräften auch erheblich größere Kräfte übertragen können, die dann auftreten, wenn das Kraftfahrzeug - beispielsweise bei einem Verkehrsunfall - einer extremen Verzögerung ausgesetzt wird. In einem solchen Fall soll der Fahrzeugsitz jedoch fest mit Karosserie verbunden bleiben, damit die für die auf dem Sitz befindliche Person vorgesehenen Schutzmaßnahmen - Sicherheitsgurt, Airbag usw. - ihre Aufgabe in der vorgesehenen Weise gerecht werden können. Kunststoff-Getriebegehäuse sind nicht immer in der Lage die oben erwähnten Kräfte unbeschadet aufzunehmen und abzuleiten.

### Vorteile der Erfindung

Bei der erfindungsgemäßen Verstellvorrichtung kann das Kunststoff-Getriebegehäuse ohne Nachteil eingesetzt werden, weil das ebenfalls im schon erläuterten Kraftfluß liegende metallische Stützteil im Bedarfsfall die höheren Kräfte aufnehmen und zuverlässig auf die Fahrzeugkarosserie abzuleiten vermag. Dabei kann den jeweiligen Forderungen der Kunden kostengünstig durch entsprechende Auslegung des einfachen Stützteils - hinsichtlich der jeweiligen Querschnitte und der Auswahl eines besonders geeigneten Materials - Rechnung getragen werden. Das bewegbare Bauteil mit dem Sitz und der auf diesem befindlichen Person werden auf diese Weise vorschriftsmäßig in einer für die Wirksamkeit der genannten Schutzmaßnahmen vorgeschriebenen Position festgehalten.

In Weiterbildung der Erfindung ist die Gegenschulter durch die dem Stützteil zugewandte Stirnfläche einer auf der Gewindespindel sitzenden Gewindebuchse gebildet. Eine derartige Ausbildung der Gegenschulter ist kostengünstig und materialsparend.

Zweckmäßig ist der U-Bügel im Bereich der freien Enden seiner U-Schenkel mit einem zum Antriebsaggregat gehörenden, traversenartigen Gehäuseteil verbunden.

Zum Ausgieichen von Toleranzen insbesondere hinsichtlich der Führung des bewegbaren Bauteils ist der U-Bügel mit dem Gehäuseteil gelenkig verbunden.

Eine besonders kompakte Ausführungsform der Erfindung wird erreicht, wenn in Fortbildung der Erfindung der U-Bügel sowohl das Getriebegehäuse als auch die Gewindebuchse übergreift und wenn weiter die Gewindespindel den Steg des U-Bügels in einer Durchbrechung durchdringt.

Wenn weiter zwischen dem Steg und der diesem zugewandten Stirnfläche der Gewindebuchse ein Spalt verbleibt, werden die im Normalbetrieb auftretenden Kräfte von dem Getriebegehäuse aufgenommen und übertragen. Im Bedarfsfall jedoch, wenn das Getriebegehäuse um das Spaltmaß zusammengedrückt wird und dabei möglicherweise zu Bruch geht, werden die Kräfte von dem Stützteil aufgefangen und auf die Karosserie abgeleitet.

Zum weiteren Ausgleich der Führungstoleranzen ist mit Vorteil auch die Gewindemutter an dem anderen Bauteil um eine Achse pendelbar gelagert, welche sich zumindest nahezu parallel zur Gelenkachse zwischen dem U-Bügel und dem Gehäuseteil erstreckt.

In weiterer Ausgestaltung der Erfindung ergibt sich ein einfaches, stabiles Gelenk zwischen dem U-Bügel und dem Gehäuseteil. wenn dieses einen Gelenkbolzen aufweist, der sowohl das Getriebegehäuse als auch die beiden U-Schenkel des als Stützteil dienenden Bügels durchdringt.

Bei dem beschriebenen Ausführungsbeispiel hat es sich als zweckmäßig erwiesen, wenn das Antriebsaggregat an dem bewegbaren zweiten Bauteil und die Gewindemutter an dem karosseriefesten ersten Bauteil angeordnet sind. Es ist jedoch auch eine Realisierung der Erfindung denkbar, bei der das Antriebsaggregat am karosseriefesten Bauteil angeordnet ist und das bewegliche Bauteil die Gewindemutter trägt.

Weitere. vorteilhafte Ausgestaltungen und Verbesserungen der Erfindung sind in den Unteransprüchen aufgeführt und aus der Zeichnung sowie der folgenden Figurenbeschreibung entnehmbar.

### Beschreibung der Zeichnungen

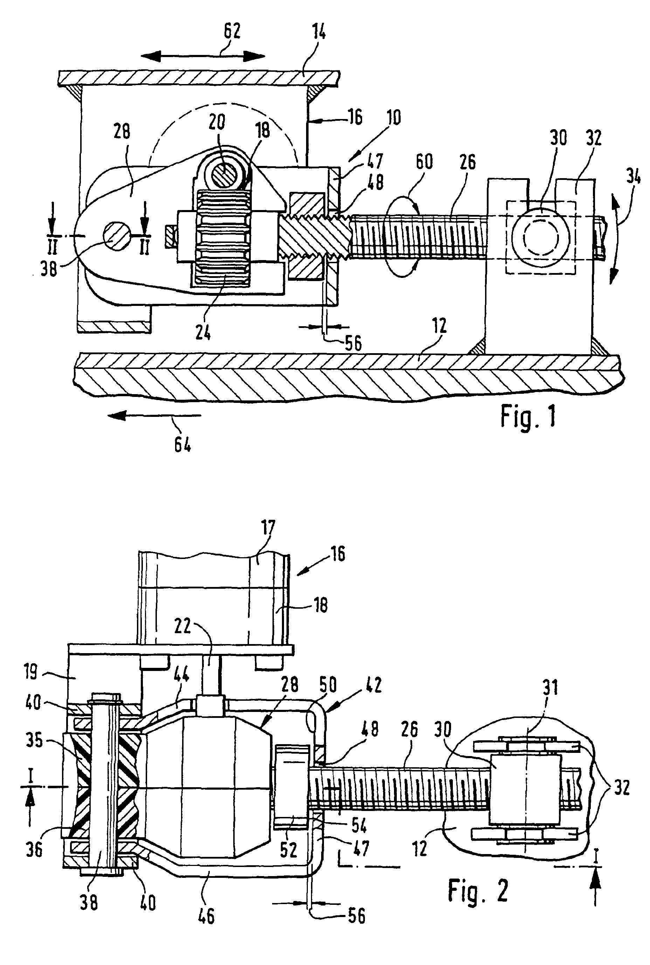

Die Erfindung wird im folgenden anhand eines in der Zeichnung dargestellten Ausführungsbeispiels näher erläutert. Es zeigen Figur 1 eine Seitenansicht einer Verstelleinrichtung für den Sitz in einem Kraftfahrzeug, teilweise entlang einer in Figur 2 eingetragenen Linie I-I geschnitten und Figur 2 eine Draufsicht auf die Verstellvorrichtung gemäß Figur 1, die teilweise entlang den in Figur angegebenen Linien II-II im Schnitt dargestellt ist.

### Ausführungs beispiel

Eine in Figur 1 dargestellte Vorrichtung 10 zum Verstellen eines Sitzes in einem Kraftfahrzeug weist ein karosseriefest angeordnetes Bauteil 12 auf, demgegen über ein mit einem nicht näher dargestellten Fahrzeugsitz verbundenes Bauteil 14 verschoben werden kann. Beim Ausführungsbeispiel ist dazu an dem beweglich angeordneten, schlittenartigen Bauteil 14 ein Antriebsaggregat 16 angeordnet, das einen elektrischen Antriebsmotor 17 und ein diesem nachgeordnetes Schneckengetriebe 18 enthält. Das Schneckengetriebe 18 weist eine Schneckenwelle 20 auf, die mit einer Abtriebswelle 22 des Antriebsaggregats 16 wirkverbunden ist. Das Antriebsaggregat 16 ist über ein an seinem Gehäuse befestigtes traversenartiges Gehäuseteil 19 mit dem schlittenförmigen Bauteil 14 fest verbunden. Die Schneckenwelle 20 des Schneckengetriebes 18 kämmt mit einem Schneckenrad 24, das drehfest auf einer Gewindespindel 26 angeordnet ist. Die Gewindespindel 26 ist im Bereich des Schneckenrades 24 in einem aus Kunststoff gefertigten Getriebegehäuse 28 drehbar gelagert. Weiter ist die Gewindespindel 26 in einer Gewindemutter 30 drehbar geführt, die in einem Lagerbock 32 in Richtung des Doppelpfeils 34 pendelbar aufgehängt ist. Der Lagerbock 32 ist fest mit dem gestellfesten Bauteil 12 der Verstellvorrichtung 10 verbunden. Das Getriebegehäuse 28 ist über das traversenartige Gehäuseteil 19 mit dem Antriebsaggregat 16 verbunden. Die Verbindung ist als Gelenkverbindung ausgeführt. Dazu weist das aus zwei Schalen 35 und 36 aufgebaute Getriebegehäuse 28 eine Querbohrung auf, welche von einem Gelenkbolzen 38 durchdrungen ist. DerGelenkbolzen 38 durchdringt weiter Bohrungen, welche in Stützlappen 40 des traversenartigen Gehäuseteils 19 angeordnet sind. Die Gelenkachse des Gelenkbolzens 38 liegt zumindest annähernd parallel zur Pendelachse 31 der Gewindemutter 30. Weiter ist an dem Gelenkbolzen 38 ein metallisches Stützteil 42 angeordnet. Das Stützteil 42 weist eine im wesentlichen U-förmige Gestalt auf. Es übergreift das Getriebegehäuse 28. Der Gelenkbolzen 38 durchdringt die freien Enden der U-Schenkel 44, 46 im Bereich der freien Enden dieser Schenkel. Der die beiden U-Schenkel 44, 46 des bügelartigen Stützteils 42 verbindende Steg 47 befindet sich mit Abstand von dem Getriebegehäuse 28. Er weist eine Durchbrechung 48 auf, durch welche die Gewindespindel 26 hindurchgreift. Zwischen dem Getriebegehäuse 28 und der diesem zugewandten Innenfläche 50 des Stegs 47 befindet sich eine ebenfalls vom Stützteil 42 übergriffene Gewindebuchse 52, welche auf die Gewindespindel 26 aufgeschraubt ist. Sie ist in einer Position fest mit der Gewindespindel 26 verbunden, in der ihre dem Steg 47 zugewandte Stirnfläche 54 mit einem Abstand oder Spalt 56 von dem Steg 47 entfernt ist. Die Innenseite 50 des Stegs 47 bildet eine Stützschulter, die - wie später noch erläutert wird - mit der als Gegenschulter wirkenden axialen Stimfläche 54 der Gewindebuchse 52 zusammenarbeitet. Die Verstellvorrichtung 10 arbeitet wie folgt:

Der zum Antriebsaggregat 16 gehörende elektrische Antriebsmotor 17 ist wahlweise in beiden Drehrichtungen zu betreiben. Auf diese Weise kann also auch über das Schneckengetriebe 18 die Gewindespindel 26 wahlweise in Richtung des Doppelpfeils 60 gedreht werden. Je nach Drehrichtung der Gewindespindel 26 schraubt sich diese durch die Gewindemutter 30 hindurch und nimmt dabei über das Getriebegehäuse 28, den Gelenkbolzen 38, das traversenartige Gehäuseteil 19 und das Antriebsaggregat 16 das mit dem Fahrzeugsitz verbundene Bauteil 14 mit. Der Sitz wird also je nach Drehrichtung der Spindel 26, in einer der beiden Richtungen bewegt, die durch den Doppelpfeil 62 in Figur 1 dargestellt sind.

Zulässige Toleranzen in der Schlittenführung können durch das pendelbar aufgehängte Getriebegehäuse 28 und die pendelbar gelagerte Gewindemutter 30 ausgeglichen werden. Die Pendelachsen des Gelenkbolzens 38 und der Lagerung der Gewindemutter 30 verlaufen zueinander im wesentlichen parallel. Zur Betrachtung des Geschehens bei einem Verkehrsunfall sei festgelegt, daß sich das Kraftfahrzeug in Richtung des Pfeiles 64 bewegt (Figur 1). Wenn das Kraftfahrzeug nun aus einer bestimmten Geschwindigkeit abrupt zum Stillstand kommt, gelangen durch den Fahrzeugsitz bzw durch die auf dem Sitz befindliche Person erhebliche Kräfte über das Bauteil 14, das Antriebsaggregat 16 das traversenartige Gehäuseteil 19 und den Gelenkbolzen 38 erhebliche Kräfte auf das Kunststoff-Getriebegehäuse 28. Unter dieser Belastung mag das Getriebegehäuse 28 brechen, so daß zwischen dem mit dem Sitz verbundenen schlittenförmigen Bauteil 14 und dem gestellfesten Bauteil 12 noch eine Relativverschiebung in Richtung des Pfeiles 64 stattfinden kann, welche dem Spaltmaß 56 zwischen der Gewindebuchse 52 und dem Steg 47 des Bügels 42 entspricht. Dann aber jedoch legt sich die Stützschulter 50 des Bügels 42 an der axialen Gegenschulter 54 der Gewindemutter 52 an, so daß diese Relativbewegung zwischen den beiden Bauteilen 12 und 14 gestoppt wird. Die Kraft geht von diesem Moment an über den Steg 47 bzw. das Stützteil 42 auf die fest mit der Gewindespindel 26 verbundene Gewindebuchse 52 und von dieser über die Spindel 26 auf die Gewindemutter 30 und Lagerbock 32 und auf das gestellfest angeordnete Bauteil 12. Es ist somit sichergestellt, daß trotz Brechens des Kunststoffgehäuses 28 der dem Bauteil 14 verbundene Sitz in seiner vorschriftsmäßigen Lage verbleibt, welche eine optimale Wirkung der schon genannten Schutzmaßnahmen sicherstellt.

Das Ausführungsbeispiel erläutert die Erfindung zwar anhand einer Vorrichtung zum Längsverstellen eines Sitzes, doch ist sie ohne Einschränkung auch zur Erzeugung anderer Verstellbewegungen (z.B. Höhenverstellung etc.) einsetzbar.

## Patentansprüche

1. Vorrichtung zum Verstellen eines Sitzes in einem Kraftfahrzeug mit einem karosseriefesten ersten und einem gegenüber diesem bewegbaren, mit dem Sitz verbundenen zweiten Bauteil sowie mit einem mit dem einen Bauteil wirkverbundenen Antriebsaggregat (16), dessen Abtriebswelle (22) über ein in einem Gehäuse (28) untergebrachtes Schneckengetriebe (18) mir einer sich in Verstellrichtung (62) erstreckenden, in einer an dem anderen Bauteil gehaltenen Gewindemutter (30) drehbaren Gewindespindel (26) zusammenarbeitet und das Getriebegehäuse (28) in den Kraftfluss vom Antriebsaggregat (16) zum bewegbaren Bauteil einbezogen ist, wobei dem Getriebegehäuse (28) ein metallisches Stützteil (42) mit einer Stützschulter (50) beigeordnet ist, der eine als Gegenschulter (54) dienende Axialschulter der Gewindespindel (26) zugeordnet ist,
**dadurch gekennzeichnet, daß** das Stützteil (42) als U-förmiger Bügel ausgebildet ist, dessen die beiden U-Schenkel (44, 46) verbindender Steg (47) die Stützschulter (50) aufweist.

2. Vorrichtung nach Anspruch 1, **dadurch gekennzeichnet, daß** die Gegenschulter (54) durch die dem Stützteil (42) zugewandte Stirnfläche (54) einer auf der Gewindespindel (26) fest angeordneten Gewindebuchse (52) gebildet ist.

3. Vorrichtung nach Anspruch 1, **dadurch gekennzeichnet, daß** das Stützteil bzw. der U-Bügel (42) im Bereich der freien Enden seiner U-Schenkel (44, 46) mit einem zum Antriebsaggregat (16) gehörenden, traversenartigen Gehäuseteil (22) verbunden ist.

4. Vorrichtung nach Anspruch 3, **dadurch gekennzeichnet, da**ß der U-Bügel (42) mit dem Gehäuseteil (19) gelenkig verbunden ist.

5. Vorrichtung nach einem der Ansprüche 1 bis 3, **dadurch gekennzeichnet, daß** der U-Bügel (42) sowohl das Getriebegehäuse (28) als auch die Gewindebuchse (52) übergreift und daß die Gewindespindel (26) den Steg (47) des U-Bügels (42) in einer Durchbrechung (48) durchdringt.

6. Vorrichtung nach Anspruch 5, **dadurch gekennzeichnet, daß** zwischen dem Steg (47) und der diesem zugewandten Stirnfläche (54) der Gewindebuchse (52) ein Spalt (56) verbleibt.

7. Vorrichtung nach einem der Ansprüche 1 bis 6, **dadurch gekennzeichnet, daß** die Gewindemutter (52) an dem anderen Bauteil um eine Achse (31) pendelbar gelagert ist welche sich zumindest nahezu parallel zur Gelenkachse (38) zwischen dem U-Bügel (42) und dem Gehäuseteil (19) erstreckt.

8. Vorrichtung nach einem der Ansprüche 4 bis 7, **dadurch gekennzeichnet, daß** das Gelenk zwischen dem U-Bügel (42) und dem Gehäuseteil (19) einen Gelenkbolzen (38) aufweist, der sowohl das Getriebegehäuse (28) als auch die beiden U-Schenkel (44, 46) des als Stützteil dienenden U-Bügels (42) durchdringt.

9. Vorrichtung nach einem der Ansprüche 1 bis 8, **dadurch gekennzeichnet, daß** das Antriebsaggregat (16) an dem bewegbaren zweiten Bauteil (14) und die Gewindemutter (30) an dem karosseriefesten ersten Bauteil (12) angeordnet sind.

## Claims

1. Device for adjusting a seat in a motor vehicle, having a first component which is fixed on the bodywork and a second component which can be moved relative to the first component and is connected to the seat, and also having a drive unit (16) which is operatively connected to the one component and whose driven shaft (22) interacts, via a worm gearing (18) accommodated in a housing (28), with a threaded spindle (26) which extends in the adjusting direction (62) and can be rotated in a threaded nut (30) held on the other component, and the gearing housing (28) is incorporated in the flow of force from the drive unit (16) to the moveable component, and the gearing housing (28) is assigned a metallic supporting part (42) having a supporting shoulder (50) which is associated with an axial shoulder of the threaded spindle (26), the said axial shoulder serving as a mating shoulder (54), **characterized in that** the supporting part (42) is designed as a U-shaped bracket whose web (47), which connects the two U-legs (44, 46), has the supporting shoulder (50).

2. Device according to Claim 1, **characterized in that** the mating shoulder (54) is formed by the end surface (54), which faces the supporting part (42), of a threaded bushing (52) arranged in a fixed manner on the threaded spindle (26).

3. Device according to Claim 1, **characterized in that** the supporting part or the U-bracket (42) is connected in the region of the free ends of its U-legs (44, 46) to a housing part (22) which is in the manner of a crosspiece and belongs to the drive unit (16).

4. Device according to Claim 4, **characterized in that** the U-bracket (42) is hinged to the housing part (19).

5. Device according to one of Claims 1 to 3, **characterized in that** the U-bracket (42) fits over both the gearing housing (28) and the threaded bushing (52), and **in that** the threaded spindle (26) penetrates the web (47) of the U-bracket (42) in an opening (48).

6. Device according to Claim 5, **characterized in that** a gap (56) remains between the web (47) and the end surface (54), which faces the latter, of the threaded bushing (52).

7. Device according to one of Claims 1 to 6, **characterized in that** the threaded nut (30) on the other component is mounted in a manner such that it can swivel about an axis (31) which extends at least approximately parallel to the hinge axis (38) between the U-bracket (42) and the housing part (19).

8. Device according to one of Claims 5 to 7, **characterized in that** the hinge between the U-bracket (42) and the housing part (19) has a hinge pin (38) which penetrates both the gearing housing (28) and the two U-legs (44, 46) of the U-bracket (42) serving as the supporting part.

9. Device according to one of Claims 1 to 8, **characterized in that** the drive unit (16) is arranged on the moveable, second component (14) and the threaded nut (30) is arranged on the first component (12) which is secured on the bodywork.

## Revendications

1. Dispositif de réglage d'un siège de véhicule automobile à l'aide d'un premier composant solidaire de la carrosserie et d'un second composant relié au siège et mobile par rapport au premier, ainsi qu'avec une unité motrice (16) coopérant avec une pièce et dont l'arbre de sortie (22) coopère par l'intermédiaire d'une transmission à vis (18) logée dans le boîtier (28), avec une broche filetée (26) montée en rotation dans un écrou (30) tenu par l'autre composant, et s'étendant dans la direction de réglage (62), tandis que le boîtier (28) de la transmission est intégré dans le cheminement des forces allant de l'unité motrice (16) à la partie mobile,
et
une pièce d'appui métallique (42) associée au boîtier de transmission (28), cette pièce d'appui ayant un épaulement d'appui (50) qui est associé à un épaulement axial servant de contre-épaulement (54) de la broche filetée (26), **caractérisé en ce que**
la pièce d'appui (42) est réalisée sous la forme d'un étrier en U dont l'âme (47) reliant les deux branches du U (44, 46) porte l'épaulement d'appui (50).

2. Dispositif selon la revendication 1,
**caractérisé en ce que**
le contre-épaulement (54) est formé par la surface frontale (54), tournée vers la pièce d'appui (42), d'une douille filetée (52) installée de manière solidaire sur la broche filetée (26).

3. Dispositif selon la revendication 1,
**caractérisé en ce que**
la pièce d'appui ou étrier en U (42) est reliée au niveau de l'extrémité libre de cette branche en U (44, 46), à une partie de boîtier (22) en forme de traverse appartenant à l'unité motrice (16).

4. Dispositif selon la revendication 3,
**caractérisé en ce que**
l'étrier en U (42) est relié de manière articulée à la partie de boîtier (19).

5. Dispositif selon l'une quelconque des revendications 1 à 3,
**caractérisé en ce que**
- l'étrier en U (42) chevauche à la fois le boîtier de transmission (28) et la douille filetée (52), et
- la broche filetée (26) traverse une ouverture (48) de l'âme (47) de l'étrier en U (42).

6. Dispositif selon la revendication 5,
**caractérisé par**
un intervalle (56) qui subsiste entre l'âme (47) et la surface frontale (54) en regard de celle-ci, appartenant à la douille filetée (52).

7. Dispositif selon l'une quelconque des revendications 1 à 6,
**caractérisé en ce que**
l'écrou fileté (52) est monté de façon pendulaire, autour d'un axe (31), sur l'autre pièce, et cet axe s'étend au moins sensiblement parallèlement à l'axe d'articulation (38) entre l'étrier en U (42) et la partie de boîtier (19).

8. Dispositif selon l'une quelconque des revendications 5 à 7,
**caractérisé en ce que**
l'articulation entre l'étrier en U (42) et la partie de boîtier (19) comporte un goujon articulé (38) qui traverse à la fois le boîtier de transmission (28) et les deux branches en U (44, 46) de l'étrier en U (42) servant de pièce d'appui.

9. Dispositif selon l'une quelconque des revendications 1 à 8,
**caractérisé en ce que**
l'unité d'entraînement (16) est prévue sur le second composant mobile (14) et l'écrou (30) est prévu sur le premier composant (12) solidaire de la carrosserie.
